# EUROPÄISCHE PATENTANMELDUNG

(11) **EP 1 371 824 A1**
(43) Veröffentlichungstag der Anmeldung: **17.12.2003**
(21) Anmeldenummer: 02012471.5
(22) Anmeldetag: 11.06.2002
(51) Int. Cl.: F01N 1/02, F01N 3/28, F01N 3/20

(54) **Vorrichtung zur Reinigung des Abgases einer Verbrennungsanlage**

(71) Anmelder: SIEMENS AKTIENGESELLSCHAFT, 80333 München (DE)
(72) Erfinder: Lösche, Hans-Jürgen, 96215 Lichtenfels (DE); Morawa, Jürgen, 97273 Kürnach (DE); Ritter, Hartmut, 96317 Kronach (DE); Zwack, Jürgen, 96145 Sesslach (DE)
(74) Vertreter: Tergau & Pohl Patentanwälte

(57) **Zusammenfassung**

Die Vorrichtung (2) dient insbesondere zur Entstickung des Abgases (A) eines Verbrennungsmotors und umfasst einen Abgaskanal (4), in dem - bezogen auf die Strömungsrichtung 6 des Abgases (A) - nacheinander ein Schalldämpfer (8) und ein Katalysator (10) angeordnet sind. Um ein Zusetzen des nachgeschalteten Katalysators (10) zu vermeiden, ist der Schalldämpfer frei von losem Dämmmaterial und weist zur Schalldämpfung lediglich feste Einbauten (18) auf. Der Schalldämpfer (8) umfasst vorzugsweise zugleich eine Mischstrecke mit Mischelementen (26A,B) zur Vermischung eines Reaktionsmittels (R) mit dem Abgas (A), welches für eine selektive katalytische Reduktion der Stickoxide im nachgeschalteten SCR-Katalysator (10) herangezogen wird.

## Beschreibung

Die Erfindung betrifft eine Vorrichtung zur Reinigung des Abgases einer Verbrennungsanlage, insbesondere zur Entstickung des Abgases eines mit fossilem Brennstoff betriebenen Kraftwerks oder eines Verbrennungsmotors. Die Vorrichtung umfasst einen Abgaskanal, in dem bezogen auf die Strömungsrichtung des Abgases ein Schalldämpfer und ein Katalysator nacheinander angeordnet sind.

Bei der Verbrennung eines fossilen Brennstoffs in einer Verbrennungsanlage entstehen in nicht unerheblichem Umfang Schadstoffe, wie Stickoxide (NOx), Kohlenwasserstoffe, Kohlenmonoxid und Schwefeloxide. Bei entsprechenden Verbrennungsstemperaturen entstehen auch Dioxine und Furane. Diese Schadstoffe können über das Abgas der Verbrennungsanlage in die Umwelt gelangen. Eine derartige Verbrennungsanlage kann z.B. eine Kesselanlage, ein Fossilkraftwerk, aber auch ein Verbrennungsmotor sein.

Um den Ausstoß der Schadstoffe in die Umwelt zu begrenzen oder zu verhindern ist für Verbrennungsanlagen eine Behandlung und Reinigung des Abgases erforderlich. Hierzu sind in der Vergangenheit eine Vielzahl von Katalysatoren entwickelt worden. So sind zur Verringerung von Stickoxiden die so genannten DeNOx-Katalysatoren bekannt, welche die im Abgas enthaltenen Stickoxide (NOx) mit einem Reduktionsmittel, meist Ammoniak oder Harnstoff, nach dem Verfahren der Selektiven Katalytischen Reduktion (SCR) zu umweltneutralem Stickstoff und zu Wasser umsetzen. Das Reduktionsmittel wird in Strömungsrichtung des Abgases vor dem Katalysator in das Abgas eingebracht. Es tritt dann in nach Möglichkeit homogener Vermischung mit den im Abgas enthaltenen Stickoxiden in den Katalysator ein. Dabei können auch mehrere Katalysatoren hintereinander geschaltet sein.

Zur Stickoxidentfernung aus dem Abgas eines Dieselmotors wird insbesondere der bereits erwähnte DeNOx- oder SCR-Katalysator verwendet. Als Reduktionsmittel wird Harnstoff in den Abgasstrom eingedüst. Mit einem solchen geregelten Diesel-Katalysator ist es möglich, den Stickoxidgehalt im Abgas des Dieselmotors erheblich zu senken.

Von einer SCR-Einrichtung für die katalytische Beseitigung von NOx im Abgas einer Verbrennungsanlage wird zunächst einmal eine deutliche und effektive Reduzierung der NOx-Emission verlangt. Daneben wird in der Regel auch eine Reduzierung der beim Betrieb der Verbrennungsanlage auftretenden Schaliemission gefordert.

Aus der WO 00/09869 ist eine Vorrichtung zur Entstickung des Abgases zu entnehmen. Bei dieser ist die bei einer SCR-Einrichtung üblicherweise vorgesehene Mischstrecke zugleich als Schalldämpfer ausgebildet, der dem SCR-Katalysator vorgeschalten ist. Die Mischstrecke dient zur Vermischung des eingedüsten Reduktionsmittels mit dem Abgas. Das für den Schalldämpfer verwendete lose Dämmmaterial, wie Stahlwolle, Keramikwolle, Stalvlies oder Faservlies, löst sich jedoch teilweise und wird vom Abgasstrom mitgetragen. Dies kann zu Verstopfungen der Kanäle des beispielsweise wabenförmigen Katalysators führen und somit die katalytische Wirkung des Katalysators erheblich mindern.

Der Erfindung liegt die Aufgabe zugrunde, einen sicheren und zuverlässigen Betrieb einer Vorrichtung zur Reinigung des Abgases einer Verbrennungsanlage zu ermöglichen.

Gemäß der Erfindung wird die Aufgabe mit den Merkmalen des Patentanspruchs 1 gelöst. Danach ist vorgesehen, dass bei der Vorrichtung in einem Abgaskanal nacheinander ein Schalldämpfer und ein Katalysator angeordnet sind, wobei der Schalldämpfer frei von Dämmmaterial ist und wobei im Schalldämpfer zur Schalldämpfung lediglich feste Einbauten vorgesehen sind.

Die Erfindung beruht hierbei auf der Erkenntnis, dass für die angestrebte Dämpfungswirkung im Schalldämpfer ein loses, beispielsweise fasriges oder filziges Dämmmaterial nicht erforderlich ist, sondern dass die Schalldämpfung durch feste Einbauten erreichbar ist. Dies hat den entscheidenden Vorteil, dass ein Eintrag von Dämmmaterial in den nachgeordneten Katalysator und dessen Verstopfung ausgeschlossen ist. Bei dieser Ausgestaltung beruht die angestrebte Schalldämpfung auf dem Prinzip der Reflexionsdämpfung der Schallwellen an festen Einbauten. Die Schallwellen werden also an den festen Einbauten jeweils geeignet reflektiert und verlieren dabei an Energie. Bei der bisher üblichen Verwendung von Dämmmaterial werden die Schallwellen im schalldämmenden Material absorbiert, ohne dass sie reflektiert werden. Die Anordnung der festen Einbauten geht daher von einem im Vergleich zu der Verwendung eines Dämmmaterials anderen Schalldämpfungs-Prinzip aus.

Im Hinblick auf einen möglichst kompakten Aufbau umfasst gemäß einer bevorzugten Ausgestaltung der Schalldämpfer eine insbesondere mit Mischelementen ausgestattete Mischstrecke. Diese dient zur Vermischung eines Reaktions- , insbesondere eines Reduktionsmittels mit dem Abgas. Das Reduktionsmittel ist beispielsweise Harnstoff, welches vor dem Schalldämpfer oder am Eingang des Schalldämpfers eingedüst wird und im nachfolgenden Katalysator zur katalytischen Umsetzung der im Abgas enthaltenen Stickoxide nach dem SCR-Verfahren verbraucht wird. Durch die Kombination mit der sowieso erforderlichen Mischstrecke ist kein zusätzlicher, separater Schalldämpfer erforderlich, der zu zusätzlichen Druckverlusten führen würde.

Zweckdienlicherweise ist der Schalldämpfer zur Dämpfung der Schallfrequenzen im niederfrequenten Bereich bis etwa 800 Hz und insbesondere im Bereich zwischen 125 und 500 Hz ausgebildet. Dieser Ausgestaltung liegt die Überlegung zugrunde, dass das von der Verbrennungsanlage erzeugte Schallspektrum nicht über den gesamten Frequenzbereich vom Schalldämpfer gedämpft werden muss, da insbesondere der Katalysator selbst auch zur Schalldämpfung beiträgt. Dabei liegen die vom Katalysator gedämpften Schallwellen im höherfrequenten Bereich. Für eine effiziente Schalldämpfung ist es daher ausreichend, wenn der Schalldämpfer lediglich den niederfrequenten Teilbereich des Schallspektrums der Verbrennungsanlage dämpft. Insbesondere im Zusammenhang mit der Verwendung der festen Einbauten zur Schalldämpfung ist dies ein wesentlicher Vorteil, da durch die Art und Weise der Ausbildung sowie der Anordnung der festen Einbauten das Frequenzspektrum der gedämpften Schallwellen entscheidend beeinflusst wird. Durch die Fokussierung auf lediglich den niederfrequenten Teilbereich ist mit den festen Einbauten eine insgesamt effiziente Schalldämpfung bei einem vergleichsweise geringen Aufwand und geringem Bauvolumen erreicht.

Gemäß einer zweckdienlichen Ausgestaltung weist ein im Schalldämpfer verlaufender Kanalabschnitt des Abgaskanals zumindest in einem Teilbereich Wandöffnungen auf, in deren Bereich der Kanalabschnitt von zumindest einer schalldämpfenden Hohl- oder Ringkammer umgeben ist. Die schalldämpfende Hohlkammer ist parallel zum Abgasstrom seitlich am Abgaskanal angeordnet. Die Schallwellen können sich daher radial zur Strömungsrichtung des Abgases in die Hohlkammer durch die Wandöffnungen ausbreiten und erfahren in der Hohlkammer eine Dämpfung.

Vorzugsweise ist in der Hohlkammer zumindest ein Lochblech angeordnet, das insbesondere im Wesentlichen parallel zum Kanalabschnitt verläuft. Für ein gutes Dämpfungsverhalten sind in der Hohlkammer dabei vorzugsweise mehrere parallel zueinander und im Wesentlichen parallel zum Kanalabschnitt verlaufende Lochbleche vorgesehen. Die Anordnung der Lochbleche unterstützt das Prinzip der Schalldämpfung mit den festen Einbauten beruhend auf der Reflexionsdämpfung. Denn einerseits gelangen Schallwellen in radialer Richtung durch die einzelnen Löcher hindurch. Andererseits wird ein großer Teil der Schallwellen an den Blechen reflektiert. Die Schallwellen werden zwischen den einzelnen Lochblechen und dem Kanalabschnitt mit den Wandöffnungen mehrfach hin und her geworfen und verlieren dabei an Energie, so dass insgesamt eine schalldämpfende Wirkung erzielt wird.

Die Einstellung des Dämpfungswerts sowie der zu dämpfenden Schallfrequenzen kann durch unterschiedliche Ausgestaltungen der Lochbleche und deren unterschiedliche Anordnung beeinflusst werden. Wesentliche Parameter hierbei sind der Lochdurchmesser der einzelnen Löcher der Lochbleche, ihr Lochabstand und das Verhältnis der durch die Löcher gebildeten offenen Fläche bezogen auf die Gesamtfläche des Lochblechs. Weitere Parameter sind der Abstand der Lochbleche untereinander sowie ihre Anzahl.

Untersuchungen haben ergeben, dass im Hinblick auf eine geeignete Schalldämpfung, insbesondere in dem beabsichtigten niederfrequenten Bereich, eine offene Fläche des Lochblechs im Bereich von etwa 20% bis 50% der Gesamtfläche des Lochblechs von Vorteil ist. Bei einer bevorzugten Gleichverteilung der Löcher und dem angegebenen Anteil der offenen Fläche weisen die einzelnen Löcher vorteilhafterweise einen Lochabstand etwa von 1mm bis 3mm auf.

Weiterhin liegt die offene Fläche des Kanalabschnitts im Bereich der Wandöffnungen vorzugsweise etwa zwischen 15% und 25%, bezogen auf die Gesamtfläche des Kanalabschnitts im Bereich der Wandöffnungen. Damit ist die relative offene Fläche des Kanalabschnitts geringer als die relative offene Fläche des Lochblechs. Durch diese geringe offene Fläche wird das durch den Kanalabschnitt strömende Abgas in seiner Strömung nur geringfügig gestört und es treten keine größeren Turbulenzen auf, wodurch ein nur geringer Strömungsdruckverlust im Bereich des Schalldämpfers begünstigt ist.

Für eine geeignete Schalldämpfung sind vorzugsweise mehrere voneinander beabstandete Hohlkammern vorgesehen. Diese sind in Strömungsrichtung des Abgases nacheinander und bevorzugt beabstandet voneinander angeordnet. Vorzugsweise weist der Kanalabschnitt auch außerhalb der Bereiche der Hohlkammern Wandöffnungen auf, so dass die Schallwellen in einen Außenraum zwischen dem Kanalabschnitt und einem umgebenden Gehäuse des Schalldämpfers gelangen können, was zusätzlich zur Schalldämpfung beiträgt.

Ein Ausführungsbeispiel der Erfindung wird im Folgenden anhand der Zeichnung näher erläutert. Es zeigen:
- FIG 1: eine stark vereinfachte Darstellung eines Schalldämpfers sowie eines diesem nachgeordneten Katalysators, die in einem Abgaskanal angeordnet sind und
- FIG 2: eine stark vereinfachte Schnittdarstellung des Schalldämpfers.

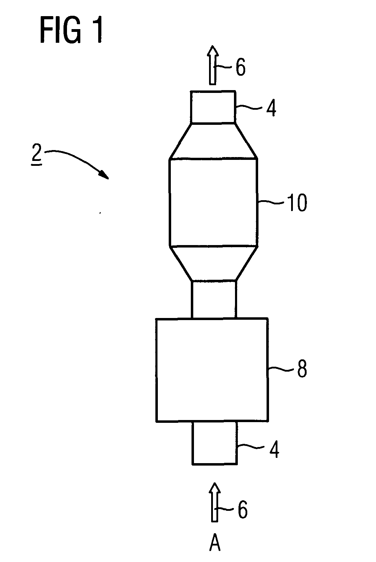

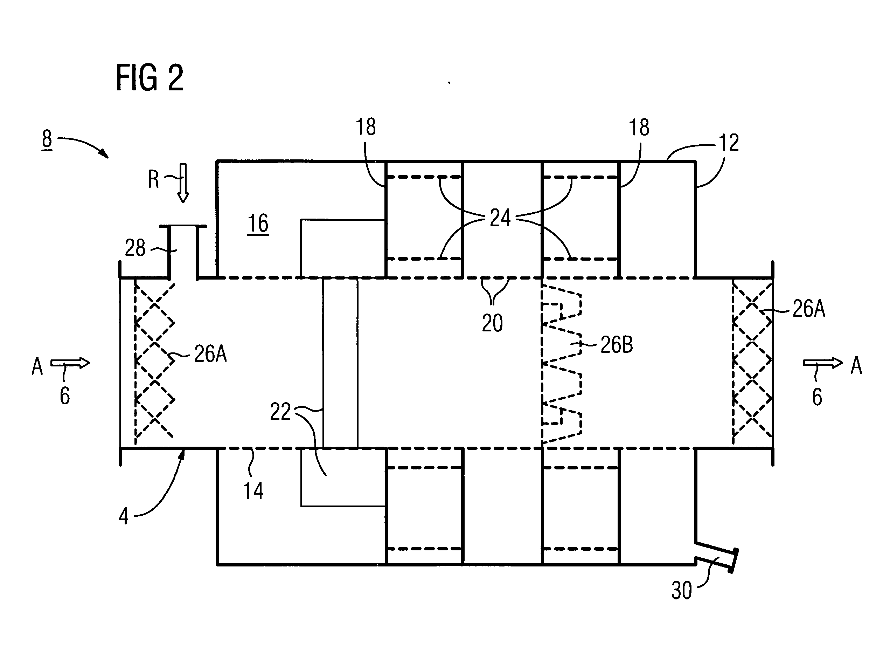

In FIG 1 ist ein prinzipieller Aufbau einer Vorrichtung zur katalytischen Entstickung des Abgases A einer (nicht dargestellten) Verbrennungsanlage gezeigt. Die Vorrichtung 2 umfasst einen Abgaskanal 4, der in Strömungsrichtung 6 vom Abgas A durchströmt wird. Im Abgasweg ist zunächst ein Schalldämpfer 8 und daran anschließend ein SCR-Katalysator 10 angeordnet. Der Schalldämpfer 8 ist zugleich auch als Mischstrecke für ein Reduktionsmittel R (vgl. hierzu FIG 2) ausgebildet und bewirkt eine innige Vermischung des eingedüsten Reduktionsmittels R mit dem Abgas A. Das Reduktionsmittel R ist insbesondere Harnstoff. Die im Abgas A enthaltenen Stickoxide werden anschließend im Katalysator 10 mithilfe des Reduktionsmittels R nach dem Verfahren der selektiven katalytischen Reduktion umgesetzt.

Die hier nicht dargestellte Verbrennungsanlage ist beispielsweise ein 2MW-Dieselaggregat eines Kraftwerks. Zur notwendigen Schalldämpfung ist sowohl der Schalldämpfer 8 als auch der Katalysator 10 vorgesehen. Es wird also ausgenutzt, dass der Katalysator 10 selbst auch eine Dämpfungswirkung besitzt. Und zwar werden im Katalysator 10 insbesondere die höherfrequenten Schallwellen oberhalb 500 bis 1000 Hz gedämpft. Der Schalldämpfer 8 ist ergänzend zu der Dämpfungswirkung des Katalysators 10 auf den niederfrequenten Bereich insbesondere zwischen 125 und 500 Hz ausgelegt. Durch diese Auslegung des Schalldämpfers 8 lediglich auf einen Teilbereich des gesamten Frequenzspektrums der Verbrennungsanlage ist lediglich ein vergleichsweise kleiner und kompakter sowie kostengünstiger Zusatzschalldämpfer erforderlich. Im Vergleich hierzu wurden bisher Schalldämpfer eingesetzt, die für das gesamte Frequenzspektrum der Verbrennungsanlage 2 ausgelegt waren und entsprechend aufwendig, voluminös und kostenintensiv ausgestaltet waren.

Ein wesentliches Element des Schalldämpfers 10 ist darin zu sehen, dass zur Schalldämpfung lediglich feste Einbauten vorgesehen sind, wie dies insbesondere aus FIG 2 hervorgeht. Zur Schalldämpfung sind daher keine schalldämmenden Dämmmaterialien, wie beispielsweise ein Faser- oder Filzmaterial, notwendig. Somit ist ein Mitreißen von Fasermaterial mit dem Abgasstrom und das Ablagern von Fasermaterial im Katalysator 10 und dessen Zusetzung vermieden.

Der Schalldämpfer 8 nach FIG 2 umfasst hierzu einen von einem Gehäuse 12 umgebenen Kanalabschnitt 14 des Abgaskanals 4. Durch das Gehäuse 12 ist der Kanalabschnitt 14 zur Umwelt hin gasdicht abgedichtet. Im Querschnitt gesehen sind der Abgaskanal 4, der Kanalabschnitt 14 sowie das Gehäuse 12 beispielsweise kreisrund, elliptisch oder auch eckig ausgebildet. Zwischen dem Kanalabschnitt 14 und dem Gehäuse 12 ist ein Außenraum 16 gebildet. In diesem Außenraum 16 sind im Ausführungsbeispiel zwei ringförmige Hohlkammern 18 angeordnet, die sich unmittelbar radial an den Kanalabschnitt 14 anschließen, und diesen vollständig umgeben. Der Kanalabschnitt 14 weist über seine gesamte Länge innerhalb des Gehäuses 12 Wandöffnungen 20 aufweist. Im Außenraum 16 sind weiterhin Stützelemente 22 für den Kanalabschnitt 14 bzw. für die eine der beiden Hohlkammern 18 vorgesehen.

Innerhalb der Hohlkammern 18 sind parallel zum Kanalabschnitt 14 sowie parallel zueinander verlaufende Lochbleche 24 angeordnet. In den Hohlkammern 18 ist neben diesen Lochblechen 24 zur Schalldämpfung kein Dämmmaterial angeordnet. Die Schalldämpfung erfolgt durch eine Reflexionsdämpfung der Schallwellen radial zur Strömungsrichtung 6 des Abgases A. Durch die Anordnung der Hohlkammern 18 in Verbindung mit den Wandöffnungen 20 und den Lochblechen 24 werden die Schallwellen innerhalb des von der jeweiligen Hohlkammer 18 umschlossenen Raums wiederholt reflektiert, und zwar an den Lochblechen 24, an der Wandung des Kanalabschnitts 14 sowie an der Wandung des Gehäuses 12. Dabei kann auch eine Reflexion über den Innenraum des Kanalabschnitts 14 hinweg erfolgen. Durch die wiederholte Reflexion der Schallwellen wird Energie absorbiert und es erfolgt die Schalldämpfung. Zusätzlich zu der Anordnung der Hohlkammern 18 erfolgt aufgrund der sich über die gesamte Länge des Kanalabschnitts 14 erstreckenden Wandöffnungen 20 auch eine Schalldämpfung und eine Reflexion außerhalb der Hohlkammern 18 im Außenraum 16.

Zur Einstellung eines gewünschten Dämpfungswerts sowie zur Einstellung des zu dämpfenden Frequenzspektrums stehen mehrere Parameter zur Verfügung. Diese sind insbesondere die Art der Ausgestaltung sowie der Anordnung der Lochbleche 24 und ihre Anzahl. In die Ausgestaltung gehen dabei die Parameter wie Lochdurchmesser, Lochabstand und relative offene Fläche ein. Unter relativer offenen Fläche wird hier der Anteil der durch die Löcher definierten Fläche bezogen auf die Gesamtfläche des jeweiligen Lochblechs 24 verstanden. Im Vergleich zu den Lochblechen 24 weist der Kanalabschnitt 14 eine geringere relative offene Fläche auf. Der Kanalabschnitt 14 ist dabei insbesondere auch als ein Lochblech ausgestaltet. Infolge der vergleichsweise geringen relativen offenen Fläche des Kanalabschnitts 14 wird die Abgasströmung nur geringfügig gestört, so dass allenfalls geringfügige zusätzliche Druckverluste durch den Schalldämpfer 8 bedingt sind. Der nur geringe zusätzliche Druckverlust wird zudem dadurch begünstigt, dass der Schalldämpfer 8 nur auf einen Teil des Frequenzspektrums der Verbrennungsanlage abgestimmt ist und daher insgesamt sehr kompakt ausfällt.

Im Hinblick auf die kompakte Bauform und den geringen Druckverlust ist insbesondere von Bedeutung, dass der Schalldämpfer 8 zugleich mit der Mischstrecke zur Vermischung des eingedüsten Reduktionsmittels R ausgebildet ist. Hierzu sind im Bereich des Schalldämpfers 8 mehrere Mischelemente 26A,B angeordnet. Und zwar befinden sich innerhalb des Abgaskanals 4 unmittelbar vor sowie unmittelbar nach dem Kanalabschnitt 14 mit den Wandöffnungen 20 beispielsweise als Gitter ausgebildete Mischelemente 26A. Weiterhin sind innerhalb des Kanalabschnitts 14 Strömungsleitelemente- oder -fahnen als Mischelemente 26B angeordnet. Die Eindüsung des Reduktionsmittels R erfolgt über eine Eindüseinrichtung 28, die in Strömungsrichtung 6 des Abgases A unmittelbar nachfolgend zum vorderen Mischelement 26A angeordnet ist. Über die Eindüseinrichtung 28 wird das Reduktionsmittel R radial zur Strömungsrichtung 6 eingebracht. Durch die Mischelemente 26A,B erfolgt eine zielgerichtete Verwirbelung des Abgases A, was zu einer innigen Vermischung mit dem Reduktionsmittel R führt.

Ein weiterer wesentlicher Vorteil des hier beschriebenen Schalldämpfers 8 ist darin zu sehen, dass er problemlos mit einem bisher üblichen, so genannten statischen Mischer, mit den dargestellten Mischelementen 26A,B kombiniert werden kann und mit diesem eine einheitliche Baueinheit bildet. Es kann also auf einen erprobten und bewährten Mischer zurückgegriffen werden und es ist kein zusätzlicher, separater Schalldämpfer notwendig, der einen zusätzlichen Druckverlust bedingen würde.

Für ein im Schalldämpfer 8 evtl. anfallendes Kondensat weist dieser an seinem in Strömungsrichtung 6 gelegenem Ende weiterhin eine Kondensatableitung 30 auf.

## Patentansprüche

1. Vorrichtung (2) zur Reinigung des Abgases (A) einer Verbrennungsanlage, insbesondere zur Entstickung des Abgases (A) eines mit fossilem Brennstoff betriebenen Kraftwerks oder eines Verbrennungsmotors, mit einem Abgaskanal (4), in dem - bezogen auf die Strömungsrichtung (6) des Abgases (A) - nacheinander ein Schalldämpfer (8) und ein Katalysator (10) angeordnet sind,
**dadurch gekennzeichnet, dass** der Schalldämpfer (8) frei von Dämmmaterial ist und dass in ihm zur Schalldämpfung lediglich feste Einbauten (18) vorgesehen sind.

2. Vorrichtung (2) nach Anspruch 1, **dadurch gekennzeichnet, dass** der Schalldämpfer (8) zugleich eine Mischstrecke zur Vermischung eines Reaktionsmittels (R) mit dem Abgas (A) umfasst.

3. Vorrichtung (2) nach Anspruch 1 oder 2, **dadurch gekennzeichnet, dass** der Schalldämpfer (8) zur Dämpfung von Schallfrequenzen im Bereich bis zu etwa 800 Hz und insbesondere im Bereich zwischen 125 und 500 Hz ausgebildet ist.

4. Vorrichtung (2) nach einem der vorhergehenden Ansprüche, **dadurch gekennzeichnet, dass** ein im Schalldämpfer (8) verlaufender Kanalabschnitt (14) des Abgaskanals (4) zumindest bereichsweise Wandöffnungen (20) aufweist, in deren Bereich der Kanalabschnitt (14) von zumindest einer schalldämpfenden Hohlkammer (18) umgeben ist.

5. Vorrichtung (2) nach Anspruch 4, **dadurch gekennzeichnet, dass** in der Hohlkammer (18) zumindest ein Lochblech (24) angeordnet ist.

6. Vorrichtung (2) nach Anspruch 5, **dadurch gekennzeichnet, dass** mehrere Lochbleche (24) angeordnet sind, die im Wesentlichen parallel zueinander und parallel zum Kanalabschnitt (14) verlaufen.

7. Vorrichtung (2) nach Anspruch 5 oder 6, **dadurch gekennzeichnet, dass** das Lochblech (24) eine offene Fläche im Bereich von etwa 20% bis 50% der Gesamtfläche des Lochblechs aufweist.

8. Vorrichtung nach einem der Ansprüche 5 bis 7, **dadurch gekennzeichnet, dass** die einzelnen Löcher einen Lochabstand zwischen etwa 1mm bis 3mm aufweisen.

9. Vorrichtung (2) nach einem der Ansprüche 4 bis 8, **dadurch gekennzeichnet, dass** die Wandöffnungen (20) eine offene Fläche im Bereich von etwa 15% bis 25% der Gesamtfläche des Kanalabschnitts (14) im Bereich der Wandöffnungen (20) bilden.

10. Vorrichtung (2) nach einem der vorhergehenden Ansprüche, **dadurch gekennzeichnet, dass** mehrere voneinander beabstandete Hohlkammern (18) vorgesehen sind.

11. Vorrichtung (2) nach einem der Ansprüche 4 bis 9, **dadurch gekennzeichnet, dass** der Schalldämpfer (8) ein den Kanalabschnitt (14) umgebendes Gehäuse (12) umfasst, und dass auch in Bereichen außerhalb der Hohlkammer (18) Wandöffnungen (20) im Kanalabschnitt (14) vorgesehen sind.
